Europäisches Patentamt

European Patent Office

Office européen des brevets

(19)

(11) **EP 1 015 192 B1**

(12) **FASCICULE DE BREVET EUROPEEN**

(45) Date de publication et mention
de la délivrance du brevet:
**26.03.2003 Bulletin 2003/13**

(21) Numéro de dépôt: **98928383.3**

(22) Date de dépôt: **28.05.1998**

(51) Int Cl.⁷: **B25J 9/10**, B25J 9/04,
A01D 46/24

(86) Numéro de dépôt international:
**PCT/FR98/01076**

(87) Numéro de publication internationale:
**WO 98/053961 (03.12.1998 Gazette 1998/48)**

(54) **MACHINE ROBOTISEE POURVUE D'AU MOINS UN BRAS A PANTOGRAPHE SYMETRIQUE, PAR EXEMPLE POUR LA RECOLTE DE FRUITS OU LE TRI D'OBJETS DIVERS**

**ROBOTER MIT EINEM SYMMETRISCHEN PANTOGRAPHENARM, INSBESONDERE ZUM PFLÜCKEN VON FRÜCHTEN ODER DERGLEICHEN**

**ROBOTIZED MACHINE EQUIPPED WITH ARM WITH SYMMETRICAL PANTOGRAPH, FOR EXAMPLE FOR FRUIT PICKING OR SORTING DIVERSE OBJECTS**

(84) Etats contractants désignés:
**AT BE DE ES FR GB IT NL**

(30) Priorité: **30.05.1997 FR 9706921**

(43) Date de publication de la demande:
**05.07.2000 Bulletin 2000/27**

(73) Titulaire: **Pellenc (Société Anonyme)**
**84120 Pertuis (FR)**

(72) Inventeur: **PELLENC, Roger**
**F-84120 Pertuis (FR)**

(74) Mandataire: **Marek, Pierre**
**Cabinet Marek,**
**28 & 32, rue de la Loge**
**13002 Marseille (FR)**

(56) Documents cités:
EP-A- 0 270 469      FR-A- 2 610 859
FR-A- 2 638 599      GB-A- 2 022 046
GB-A- 2 114 534      US-A- 4 733 576
US-A- 5 151 008

EP 1 015 192 B1

Printed by Jouve, 75001 PARIS (FR)

## Description

La présente invention concerne une machine robotisée pourvue d'au moins un bras à pantographe symétrique, cette machine pouvant être agencée et programmée pour l'accomplissement de tâches diverses impliquant la reconnaissance d'un objet prédéterminé dans son environnement et une intervention sur cet objet, après sa détection.

La machine selon l'invention peut, par exemple, être conformée, agencée et programmée pour effectuer la récolte robotisée de fruits tels que pommes, poires, pêches, oranges et autres agrumes, etc. Dans cette application très intéressante, la machine robotisée permet de repérer et de cueillir individuellement les fruits avec leur pédoncule et de les déposer sans chocs dans un réceptacle de grande contenance ou dans un dispositif de réception assurant leur acheminement jusqu'à un tel réceptacle.

La machine selon l'invention peut également être agencée, conformée et programmée, pour remplir d'autres tâches telles que, par exemple, le tri de déchets (déchets ménagers, déchets industriels, etc.) ou d'objets divers, ou, encore, la prise d'un objet à poste fixe.

On a décrit, dans le document EP 0.270.469 A, une machine robotisée selon le préambule de la revendication 1 et comprenant :

- d'une part, un bras de manipulation ou manipulateur monté avec une aptitude de rotation autour de deux axes perpendiculaires et concourants, et dont l'extrémité libre est munie d'un organe de préhension et,
- d'autre part, un système de vision installé fixement au point d'intersection de ces axes de rotation, ce système de vision comprenant, par exemple, une unique caméra ou plusieurs micro-caméras convergentes ; ledit bras de manipulation étant conformé de manière à permettre audit organe de préhension une translation dans l'aligement du faisceau optique dudit système de vision, le long d'une trajectoire rectiligne qui croise l'intersection desdits axes de rotation, au centre optique du système de vision. Ce manipulateur dit "à coordonnées sphériques" (deux rotations concourantes et une translation vers l'objet à saisir) possédant un système de vision en son centre, comprend un bras repliable monté en compas. Ce bras comporte deux branches disposées dans le même plan et constituées par deux parallélogrammes articulés de forme allongée et assemblés, à leur point de rencontre, au moyen d'une chape constituant, à la fois, les deux petits côtés voisins de ces deux parallélogrammes articulés, ledit bras repliable étant pourvu d'un dispositif communiquant un mouvement symétrique à ses deux branches, lors de son déploiement ou lors de son repliage, cet agencement et ce mouvement symétrique permettant un déplacement rectiligne de l'organe de préhension de la machine. Le dispositif permettant d'obtenir un mouvement symétrique des deux branches du bras repliable, comprend deux roues dentées engrenant l'une avec l'autre et calées fixement, sur les extrémités adjacentes des biellettes internes constituant l'un des grands côtés des parallélogrammes articulés, les différents mouvements dudit bras repliable étant obtenus au moyen d'actionneurs constitués par des vérins hydrauliques.

Grâce à cette construction, il est possible de faire coïncider parfaitement le centre de l'organe de préhension avec l'axe du faisceau optique du système de vision, lorsque ledit organe se déplace en direction de l'objet à saisir. De la sorte, l'organe ou outil de préhension se présente toujours dans une position correcte par rapport à L'objet à atteindre qui peut être ainsi saisi efficacement.

Toutefois, l'architecture des bras robotisés décrits dans le document EP-A-0.270.469 conduit à la réalisation d'ensembles lourds incorporant des actionneurs hydrauliques avec servo-valves, ce qui constitue un handicap important dans la mise en oeuvre des techniques de robotique. D'autre part, cette architecture n'autorise qu'une course limitée de l'organe ou outil de préhension pour un encombrement déterminé, de sorte que pour obtenir une course importante dudit organe de préhension, il est nécessaire de prévoir des bras robotisés de grandes dimensions dont l'encombrement est incompatible avec certaines applications, notamment pour les machines multi-robots comportant au moins deux ensembles robotisés placés dos à dos.

L'invention a plus particulièrement pour but de remédier aux inconvénients ci-dessus.

On connait, par ailleurs, des bras robotisés (US 4.897.015 A, US 5.046.992 A, EP 0.629.475 A, GB 2.022.046 A) à double pantographe, comprenant une première partie ou bras et une deuxième partie ou avant-bras, disposées dans deux plans parallèles de façon à pouvoir se croiser, ces deux parties étant assemblées à l'une de leurs extrémités au moyen d'une articulation comprenant un axe commun sur lequel est calé un premier pignon relié, au moyen d'un lien souple de transmission (chaîne, courroie crantée ou autre), à un deuxième pignon fixe disposé à l'extrémité opposée du bras lequel est monté avec une aptitude de pivotement autour de l'axe portant ledit deuxième pignon dont le diamètre est le double de celui du pignon auquel il est relié, l'axe d'articulation des deux parties du bras étant rigidement fixé à l'avant-bras et solidaire en rotation de ce dernier, le bras portant, à sa partie supérieure, un troisième pignon fixe relié, au moyen d'un lien souple de transmission (chaîne, courroie crantée ou autre), à un quatrième pignon disposé à l'extrémité opposée dudit avant-bras et dont le diamètre est également le double de celui dudit troisième pignon, ce quatrième pignon étant calé sur un axe fixé à la partie postérieure du préhenseur et solidaire en rotation de ce dernier, ledit bras étant assujetti à des moyens assurant son basculement autour de son axe fixe, engendrant, suivant le sens de ce basculement, un mouvement d'avance ou de recul de la tête de préhension du préhenseur le long d'une trajectoire rectiligne.

En vertu de cette conception, les bras robotisés à double pantographe ou pantographe symétrique décrits dans les documents précités ont une cinématique de transmission permettant que toute rotation du bras de valeur (+ a) par rapport à une base fixe, se traduit par un déplacement angulaire de l'avant-bras d'une valeur (- 2a) par rapport au bras, et une rotation du préhenseur d'une valeur (+ a) par rapport à l'avant-bras, la résultante étant une simple translation du préhenseur par rapport à un repère fixe.

En outre :

- le document US-A-4.897.015 décrit sommairement un robot cylindrique (une rotation : Thêta, une élongation : R, et une translation Z) ;
- le document US-A-5.046.992 décrit avec plus de détails un autre robot cylindrique (une rotation : Thêta, une élongation R, et une translation Z) ;
- le document EP-A-0.629.475 décrit un robot cartésien (une élongation : X, 2 translations Y et Z).
- le document GB-2 022 046 A décrit un manipulateur à un seul degré de liberté, volontairement très simple et destiné à transférer un objet d'une position à une autre, par exemple sur une chaine d'assemblage.

Une conséquence de ces structures est que le plan dans lequel s'effectue l'élongation du bras est toujours un plan horizontal, ce qui limite leur souplesse d'utilisation à des tâches dans le plan horizontal, par exemple transporter ou manipuler une pièce entrant dans un processus de fabrication ou de traitement, d'un poste fixe à un autre poste fixe.

En outre, les bras de manipulation robotisés à pantographe symétrique décrits dans les documents susmentionnés sont dépourvus de système de vision, ce qui limite grandement le champ de leurs applications.

L'invention a notamment pour but de s'affranchir des contraintes imposées par les robots décrits dans les documents susmentionnés et de remédier à leurs insuffisances.

Cet objectif est atteint grâce à une machine robotisée décrite dans la revendication 1.

Grâce à cette machine robotisée, il est non seulement possible de réduire l'encombrement du bras tout en augmentant la longueur de la course du préhenseur pour un encombrement déterminé (la partie postérieure du préhenseur pouvant reculer en arrière de l'emplacement où se trouve installé le système de vision), mais l'élongation du bras peut s'effectuer dans des plans quelconques, ce qui donne une grande souplesse d'utilisation et permet l'affectation du robot à géométrie sphérique à des tâches nécessitant une grande variété de mouvements, telles que, par exemple, la récolte de fruits ou le tri des déchets.

En résumé, une première disposition caractéristique importante de l'invention réside dans la combinaison originale d'un manipulateur robotisé à coordonnées sphériques et à système de vision artificielle et un bras de manipulation à double pantographe ou pantographe symétrique.

Un autre inconvénient des robots décrits dans les documents US 4.897.015 A, US 5.046.992 A et EP 0.629.475 A et GB 2 022 046 A, réside dans le fait que les mouvements d'élongation et de repliement de leur bras robotisé à pantographe symétrique, sont obtenus au moyen de systèmes de transmission comprenant notamment : deux chaines, quatre pignons et plusieurs tendeurs de chaines. Ces systèmes nécessitent des opérations de maintenance pour le réglage de la tension des chaînes, des opérations d'entretien (graissage) desdites chaînes et la prévision de carters de chaines pour les préserver de la poussière.

Un autre objectif réalisé par la machine selon l'invention est de limiter grandement l'importance de cet inconvénient.

Grâce à cette machine robotisée et à la construction de son bras de manipulation, on obtient notamment les avantages suivants :

- simplification des opérations de maintenance de réglage de la tension des liens de transmission, due à la suppression de l'une des chaînes et de ses tendeurs ;
- simplification des opérations d'entretien (graissage) des liens de transmission, découlant de l'utilisation d'une seule chaîne ;
- facilité et rapidité accrues des opérations de réglage (calage ) du préhenseur dans l'espace caméra ;
- fiabilité et précision du réglage améliorées.

Les buts, caractéristiques et avantages ci-dessus, et d'autres encore, ressortiront mieux de la description qui suit et des dessins annexés dans lesquels :

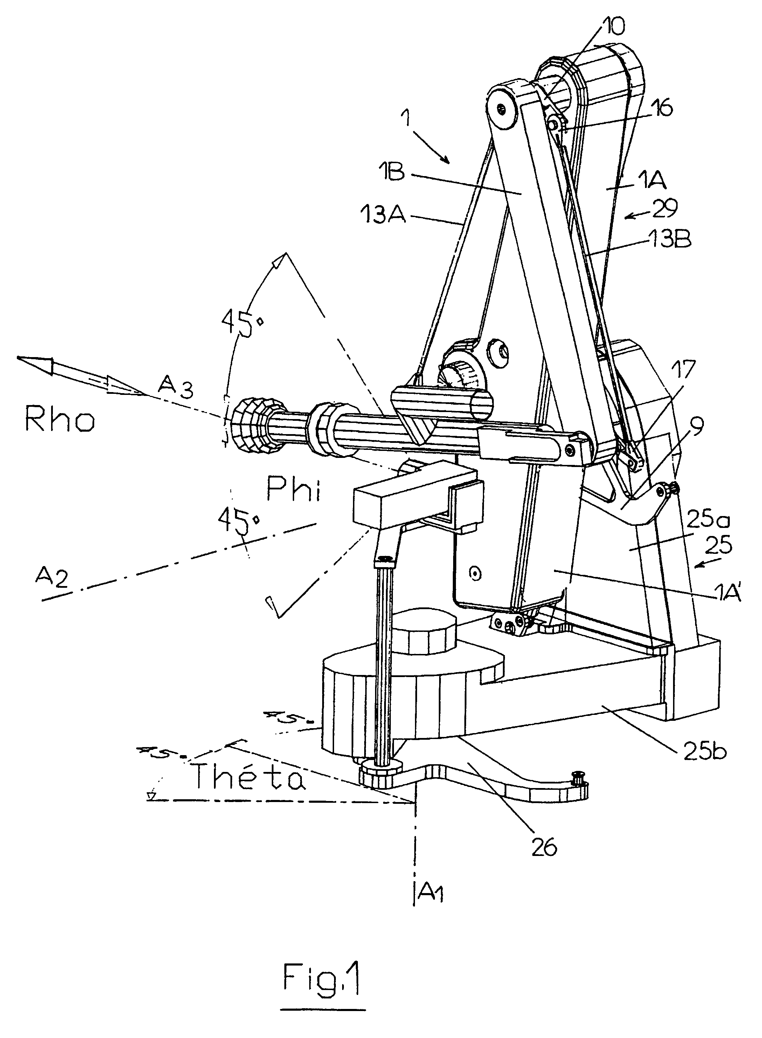

La figure 1 est une vue en perspective de l'ensemble du manipulateur à pantographe symétrique d'une machine robotisée selon l'invention.
La figure 2 est une vue de face, avec coupes verticales, de cette machine.
La figure 3 est une vue de côté de la figure 2, montrant le bras dans une configuration correspondant à la position de recul extrême du préhenseur.
La figure 4 est une vue de face, à plus grande échelle et avec coupes verticales du bras de manipulation à pantographe symétrique, montré sans le préhenseur.

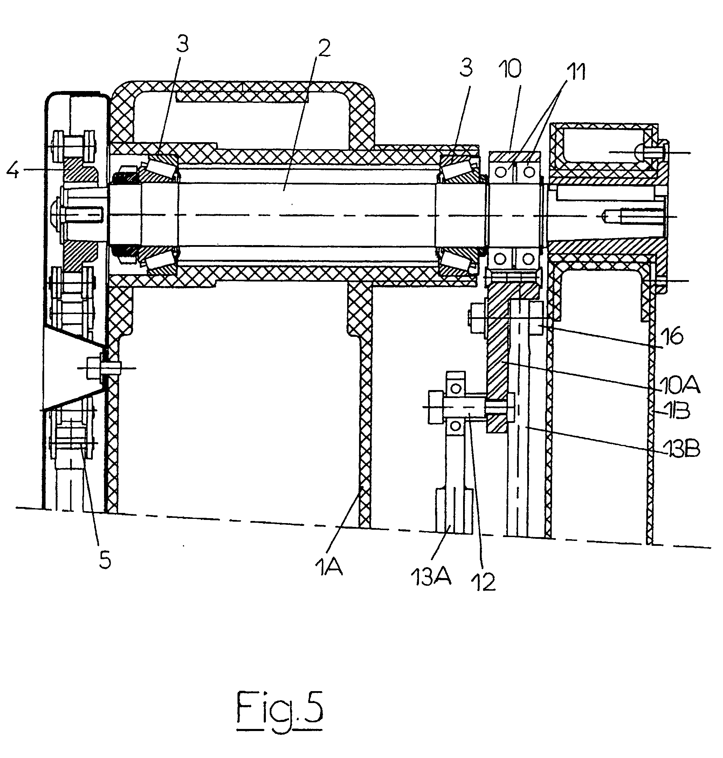

La figure 5 est une vue de face, à échelle encore agrandie et en coupe, de la partie supérieure de ce bras de manipulation.

La figure 6 est une vue à caractère schématique de la cinématique de transmission du bras à pantographe symétrique représenté dans une position de déploiement.

La figure 7 est une vue de côté illustrant deux positions extrêmes de la tête de préhension du préhenseur et le déplacement de celle-ci le long de l'axe optique du système de vision.

Les figures 8 à 10 sont des vues de détail illustrant le réglage de la bielle de référence réglable de la transmission à pantographe symétrique.

On décrit ci-après un mode d'exécution intéressant de la machine robotisée comprenant un manipulateur à coordonnées sphériques et à au moins trois degrés de liberté : deux rotations perpendiculaires et concourantes Theta et Phi et une translation Rho de son préhenseur vers l'objet à saisir, de sorte que l'axe de la translation de ce préhenseur intersecte toujours les deux axes des rotations en un point central I. Cette machine est avantageusement applicable à la récolte robotisée de fruits ou au tri robotisé de déchets ou autres objets. Un système de vision artificielle est installé fixement par rapport au bras de manipulation, pour le repérage des objets à saisir, et le foyer ou centre optique de ce système de vision se trouve placé fixement, exactement à l'intersection des axes des rotations Thêta, Phi, et de la translation Rho.

Afin de ne pas allonger inutilement la description, on décrit uniquement ci-après la partie de la machine robotisée, comportant application de l'invention revendiquée, la partie décrite pouvant être installée sur un ensemble porteur conformé et agencé en fonction de la destination de la machine, cet ensemble pouvant être un véhicule automoteur dans le cas d'une application à la récolte robotisée de fruits, ou un portique fixe ou mobile surmontant une zone de travail mobile (par exemple tapis transporteur) ou fixe, dans le cas d'une application au tri robotisé de déchets ou autres objets.

Selon l'exemple illustré, la machine robotisée comprend un manipulateur à coordonnées sphériques comportant un bras de manipulation à géométrie variable 1 constitué par un bras à pantographe symétrique comprenant une première branche ou bras 1A et une deuxième branche ou avant-bras 1B assemblés, à leur sommet, par une articulation. Cette liaison articulée est réalisée au moyen d'un arbre 2 monté tournant dans des paliers 3 équipant l'extrémité distale du bras 1A. Le bras 1A et l'avant-bras 1B sont disposés dans deux plans parallèles, de façon à pouvoir se croiser.

Sur l'arbre 2, sont calés :

- un premier pignon 4 relié, au moyen d'une chaîne 5 ou autre lien souple ou rigide de transmission, tel que courroie crantée par exemple, à un deuxième pignon fixe 6 calé sur un axe fixe 7 autour duquel est monté, avec une aptitude de pivotement, le bras 1A, par l'intermédiaire de son extrémité proximale et de paliers 8 ;

- l'extrémité proximale de l'avant-bras 1B qui est ainsi solidaire en rotation dudit axe 2 et dudit pignon 4.

Le pignon 6 a un diamètre (D6) qui est le double du diamètre (D4) du pignon 4. Autrement dit, D6 = 2 D4 ou $D4 = \frac{D6}{2}$.

D'autre part, l'axe fixe 7 est rigidement solidaire d'un basculeur 9 supportant l'ensemble du bras de manipulation 1 proprement dit.

Sur l'arbre 2, est encore monté un renvoi 10 dont la portion centrale présente un orifice muni d'un palier 11 pour le passage dudit axe qui peut ainsi tourner dans ledit renvoi. Le renvoi 10 présente, de part et d'autre de sa portion centrale, une branche proximale 10A et une branche distale 10B. Le renvoi 10 peut être avantageusement constitué par une robuste pièce métallique ayant, vue de face, une forme générale triangulaire et dont les points d'articulation sont disposés aux sommets d'un triangle.

La branche proximale 10A du renvoi 10 est reliée, par l'intermédiaire d'une articulation 12, à l'une des extrémités d'un premier tirant rigide 13A dont l'extrémité opposée est reliée, également au moyen d'une articulation 14, à l'une des extrémités d'une bielle fixe 15 dont l'autre extrémité est montée fixement autour de l'axe 7 soutenant l'ensemble du bras de manipulation 1.

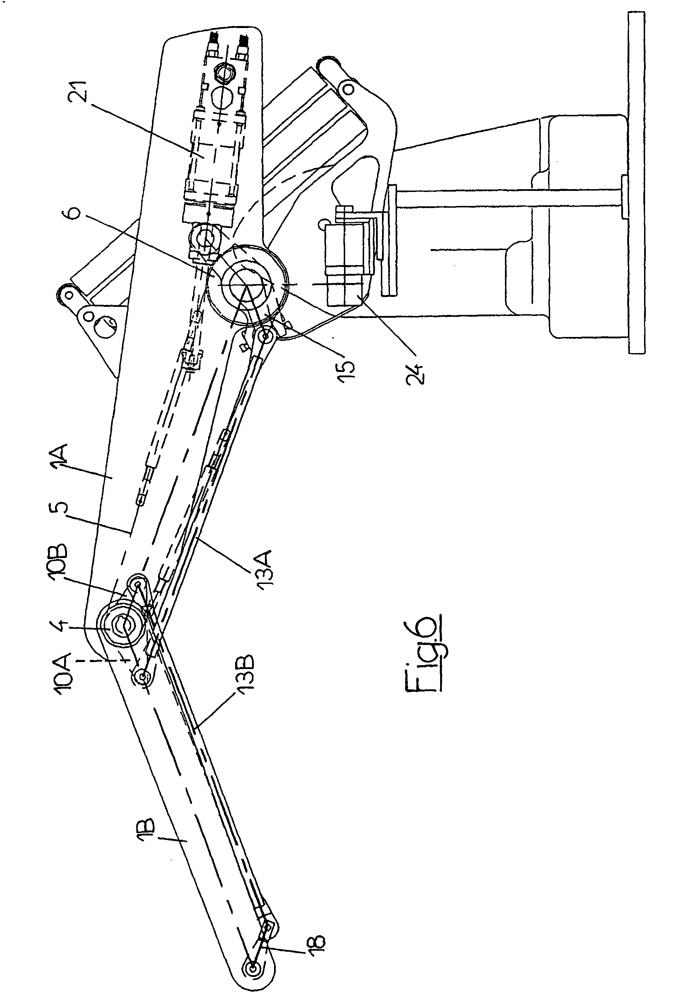

L'ensemble : bras 1A-branche proximale 10A du renvoi 10 - tirant 13A-bielle 15, forme un premier parallélogramme déformable dont la bielle 15 constitue un côté fixe (tracé en trait fort de La figure 6).

La distance comprise entre les points d'articulation du tirant 13A est égale à la distance séparant les points d'articulation du bras 1A, tandis que la distance comprise entre les points d'articulation de la bielle 15 est égale à la distance séparant les points d'articulation de la branche proximale 10A du renvoi 10.

L'orientation de la branche proximale 10A du renvoi 10 est donc identique à l'orientation de la bielle 15 qui, selon une autre disposition caractéristique de l'invention décrite dans la suite du présent exposé, est réglable.

La branche distale 10B du renvoi 10 est reliée, par l'intermédiaire d'une articulation 16, à l'une des extrémités d'un deuxième tirant rigide 13B dont l'extrémité opposée est reliée, également au moyen d'une articulation 17, à une bielle 18 dont l'autre extrémité est rigidement solidaire de l'arbre 19 du préhenseur 20. L'arbre 19 est également rigidement solidaire de l'extrémité proximale du préhenseur 20 et il est logé avec une aptitude de rotation, par l'intermédiaire de paliers 19a, dans l'extrémité distale de l'avant-bras 1B.

L'ensemble : avant-bras 1B-branche distale 10B du renvoi 10-tirant 13B-bielle 18, forme un deuxième parallélogramme déformable (tracé en trait fort de la figure 6).

La distance comprise entre les points d'articulation du tirant 13B est égale à la distance séparant les points d'articulation de l'avant-bras 1B, tandis que la distance comprise entre les points d'articulation de la bielle 18 solidaire du préhenseur 20, est égale à la distance séparant les points d'articulation de la branche distale 10B du renvoi 10.

L'orientation de la bielle 18 solidaire du préhenseur 20 est donc identique à l'orientation de la branche distale 10B du renvoi 10.

Le préhenseur 20 peut avantageusement avoir une longueur relativement importante, c'est-à-dire, selon une disposition caractéristique de l'invention, une longueur au moins égale ou supérieure à la longueur de l'avant-bras 1B, et il est muni d'une tête de préhension 20a constituant son extrémité libre.

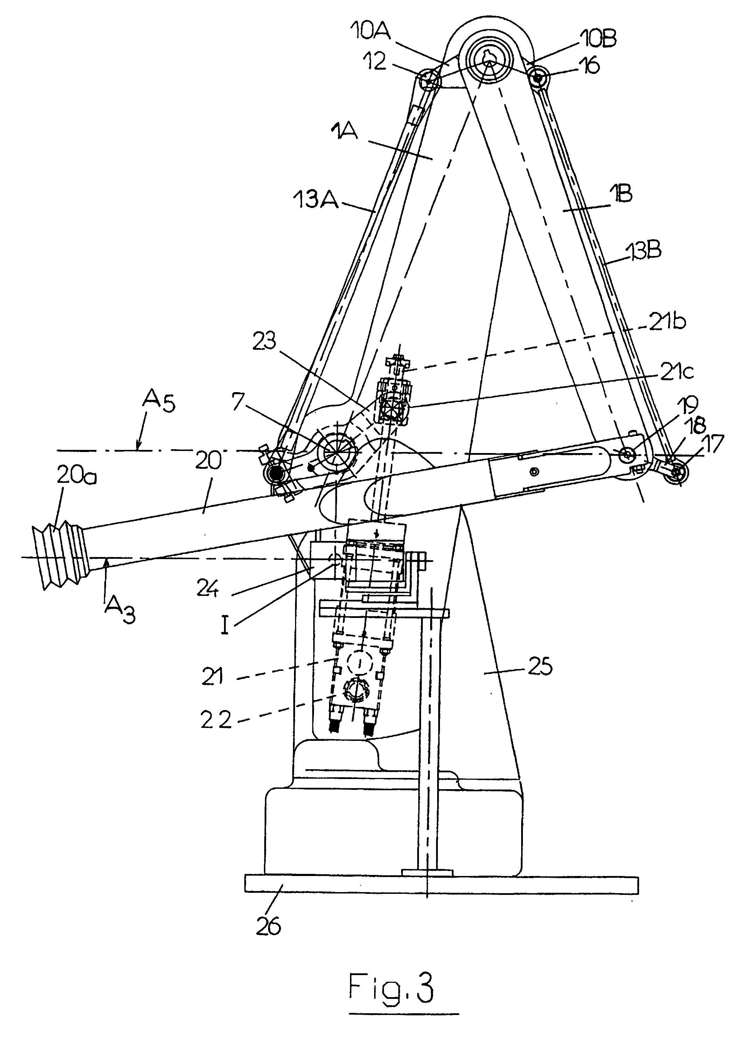

Plus généralement, selon l'invention, le bras de manipulation à pantographe symétrique 1 a une configuration telle que l'extrémité distale 20a du préhenseur 20 se déplace sur l'axe optique A3 du système de vision 24 décrit ci-après, tandis que l'extrémité arrière dudit préhenseur liée à l'extrémité distale de l'avant-bras 1B se déplace sur un axe A5 parallèle audit axe A3, de sorte à pouvoir se déplacer en arrière de ce système de vision (figure 3).

Dans une application très intéressante de l'invention à la récolte des fruits, le préhenseur 20 est constitué, au moins en partie, par un tube rigide raccordé, par l'intermédiaire d'un tuyau souple, à la bouche d'aspiration d'un aspirateur installé sur le châssis de la machine. Dans ce cas, la tête de préhension 20a du préhenseur 20 est constituée par une tête d'aspiration.

Le bras 1 ainsi agencé est assujetti à des moyens 21 assurant son basculement autour de son axe fixe 7, ce basculement engendrant, suivant sa direction, un mouvement d'avance ou de recul de la tête de préhension 20a du préhenseur 20, le long d'une trajectoire rectiligne Rho, correspondant à l'axe optique A3 du système de vision.

Les mouvements d'allongement et de repliement du bras de manipulation 1 entrainant des mouvements d'avance et de recul de la tête de préhension 20a sont obtenus au moyen d'un vérin électrique constitué par un moteur à vis à billes 21.

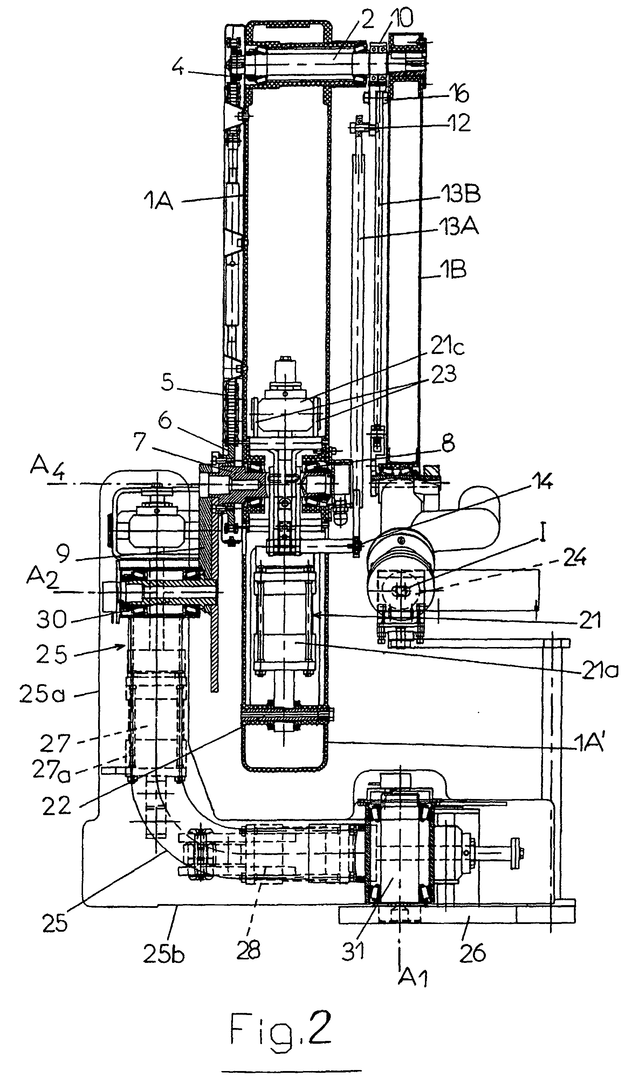

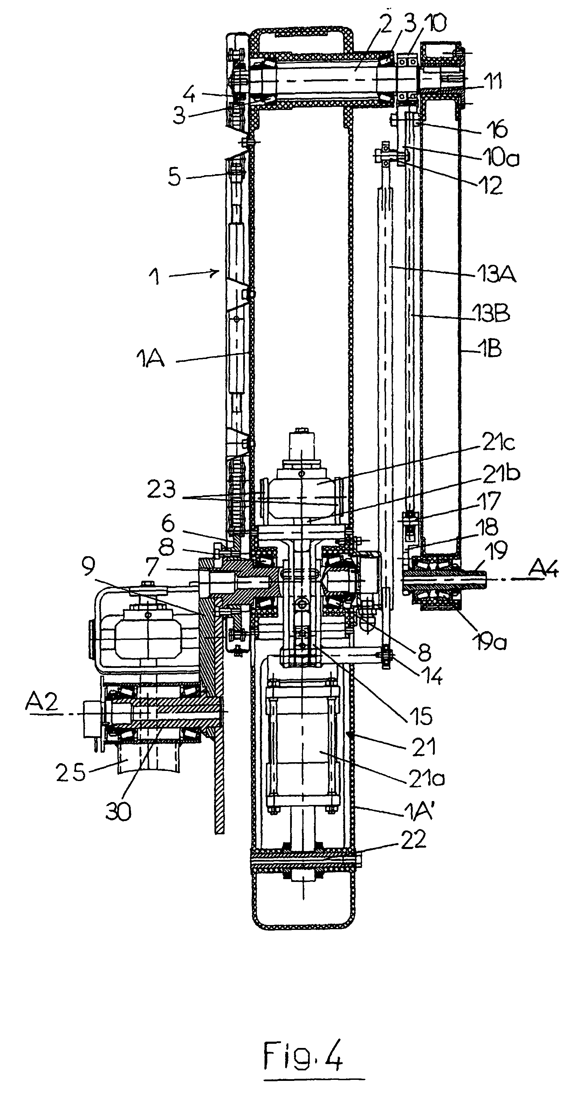

Le bras ou branche proximale 1A du bras de manipulation présente une portion 1A' qui s'étend au-dessous ou au-delà de l'axe A4 de pivotement de ladite branche proximale, matérialisé par l'axe fixe 7 (figure 4). Suivant une autre disposition caractéristique de l'invention, l'extrémité postérieure du corps 21a du moteur 21 est fixée, avec une possibilité de pivotement, à un axe 22 disposé dans ladite portion 1A' du bras 1A, tandis que l'écrou 21c coopérant avec la vis 21b dudit moteur est disposé à distance de l'axe fixe 7 et porté, avec une aptitude de pivotement, autour d'un axe perpendiculaire à l'axe de rotation de ladite vis, par une chape fixe 23 rigidement solidaire de l'axe 7 et du basculeur 9 (figures 2 et 3).

De la sorte, la quasi totalité de la masse du moteur 21 se trouve disposée au-dessous ou au-delà de l'axe de pivotement A4 de La branche proximale 1A et contrebalance le poids de l'ensemble du bras de manipulation 1A-1B-20. Cette disposition permet donc un meilleur équilibrage des masses mobiles autour de l'axe 7.

L'ensemble du bras de manipulation 1-20 à pantographe symétrique ainsi configuré est monté sur le châssis de la machine avec une aptitude de pivotement autour de deux axes perpendiculaires et concourants A1, A2.

Le basculeur 9 portant le bras, est monté avec une aptitude de basculement autour d'un axe A2, à la partie supérieure d'une tourelle 25, elle-même supportée, avec une latitude de pivotement autour d'un axe A1, par une embase fixe 26, les axes A2 et A1 étant, de préférence, orientés perpendiculairement.

Le basculeur 9 est, par exemple, monté avec une Latitude de pivotement et par l'intermédiaire de paliers, autour d'un axe horizontal fixe 30 porté par le sommet de la tourelle 25, tandis que la tourelle est, par exemple, monté avec une aptitude de pivotement et par l'intermédiaire de paliers, autour d'un axe vertical fixe 31 porté par l'embase 26.

Les mouvements de basculement du basculeur 9 portant le bras 1, autour de l'axe A2, et de la tourelle 25 supportant ledit basculeur autour de l'axe A1, sont obtenus par des actionneurs électriques, respectivement 27, 28, de préférence identiques à l'actionneur électrique 21 précédemment décrit.

Le vérin électrique à vis à bille 27 assurant le basculement du basculeur 9 autour de L'axe horizontal 30 correspondant à l'axe géométrique A2, est fixé, au moyen d'articulations, d'une part, à la tourelle 25 et, d'autre part, au basculeur 9.

Le vérin électrique à vis à bille 28 assurant le pivotement de la tourelle 25 autour de l'axe vertical 31 correspondant à l'axe géométrique A1, est fixé, au moyen d'articulations, d'une part, à la tourelle 25 et, d'autre part, à l'embase fixe 26.

On observe que les différents actionneurs électriques 21, 27, 28, du bras robotisé, sont logés dans des carters constitués par :

- une enveloppe de forme allongée 29 formée par une partie constitutive du bras 1A, en ce qui concerne l'actionneur 21 ;
- la partie verticale 25a de la tourelle 25, pour l'actionneur 27 ; et
- par la partie horizontale 25b de ladite tourelle 25, pour l'actionneur 28.

Après la description qui précède, on comprend que grâce à l'agencement du bras robotisé à pantographe symétrique 1-20, selon l'invention, la mise en rotation de la vis 21a du vérin électrique 21 entraîne le basculement du bras 1A, autour d'un axe A4 (matérialisé par l'axe fixe 7), dans un sens ou dans l'autre, suivant le sens de rotation de ladite vis. D'autre part, grâce à la cinématique de transmission précédemment décrite, toute rotation du bras 1A de valeur (+ a), par rapport à sa base, se traduit par un déplacement angulaire de sens contraire de l'avant-bras 1B d'une valeur (- 2a) par rapport audit bras, et par une rotation du préhenseur 20 de sens contraire par rapport audit avant-bras d'une valeur (+ a), le résultat étant une simple translation de l'extrémité distale du préhenseur par rapport à un repère fixe, de sorte que la tête de préhension 20a reste positionnée sur un axe A3, correspondant à l'axe optique du système de vision, notamment lors de ses déplacements en direction de l'objet à saisir.

En effet, pendant les phases d'allongement ou de repliement du bras 1, la bielle 15 est immobile. Le renvoi 10 conserve donc son orientation grâce au parallélogramme déformable 15-13A-10A-1A construit autour du tirant 13A ; le parallélogramme déformable 10B-13B-18-1B construit autour du tirant 13B recopie l'orientation du renvoi 10 sur la bielle 18 solidaire du préhenseur 20. L'orientation du renvoi étant conservée, le préhenseur conserve donc son orientation et se déplace en conservant cette orientation.

Le robot précédemment décrit est donc du genre à géométrie générale sphérique (deux rotations concourantes : Théta (autour de l'axe A1), Phi (autour de l'axe A2) et une translation Rho (le long de l'axe A3) du préhenseur 20 vers l'objet à saisir).

Selon l'invention, le système de vision artificielle 24 de ce robot à coordonnées sphériques et à pantographe symétrique, est installé fixement sur un élément fixe du châssis de la machine, à l'intersection I des axes A1, A2, A3 des rotations Théta, Phi et de la translation Rho de la tête de préhension 20a du préhenseur 20.

Ce système de vision 24, le module de traitement des images enregistrées par ce dernier et l'ordinateur de commande des mouvements du manipulateur, n'entrent pas dans le cadre du présent brevet et ne sont donc pas décrits.

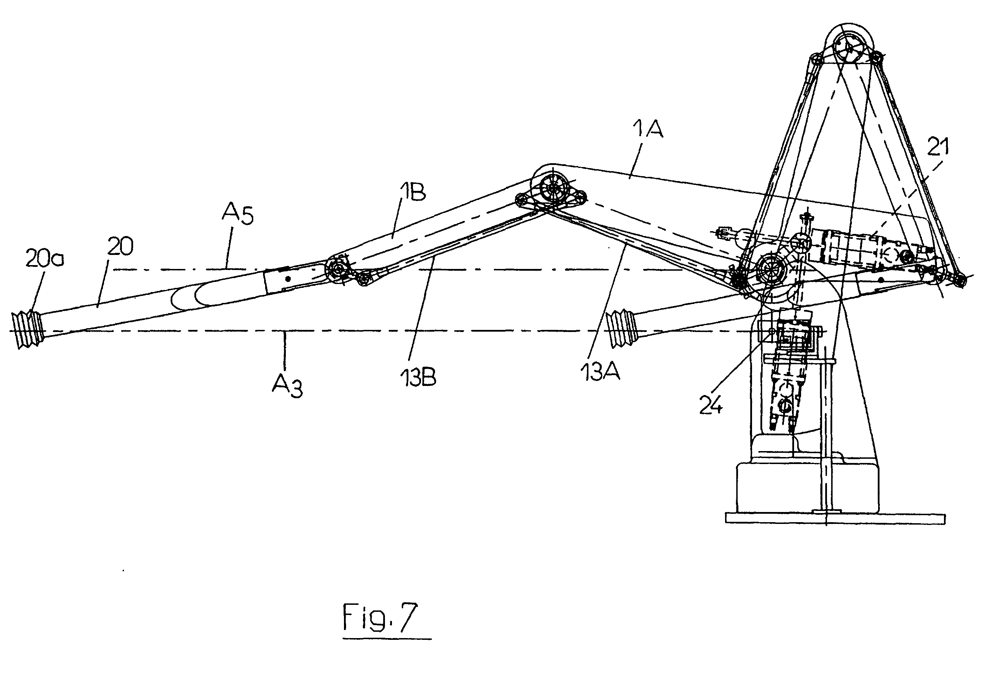

Suivant l'agencement décrit précédemment, l'extrémité distale de l'avant-bras 1B liée au préhenseur 20 peut se déplacer au-dessus du système de vision 24, suivant un axe A5 parallèle à l'axe optique A3 de ce dernier. De la sorte, dans la position de recul (figure 3), une importante partie de la longueur du préhenseur 20 peut être amenée en arrière du système de vision 24, comme indiqué précédemment, ce qui permet d'avoir une course importante dudit préhenseur, avec un encombrement réduit de l'ensemble du bras de manipulation en position de recul ou en position de repos. D'autre part, malgré le décalage des axes A3 et A5, la tête de préhension 20a est disposée sur l'axe optique A3 du système de vision 24 et se déplace le long de cet axe sur la totalité de sa course de translation possible en direction de l'objet détecté par ledit système de vision et identifié par l'intelligence artificielle de la machine (figure 7).

Selon une autre disposition caractéristique de l'invention, la bielle 15 constituant le côté fixe du parallélogramme déformable 1A-10A-13A-15, a une position réglable par rapport au basculeur 9.

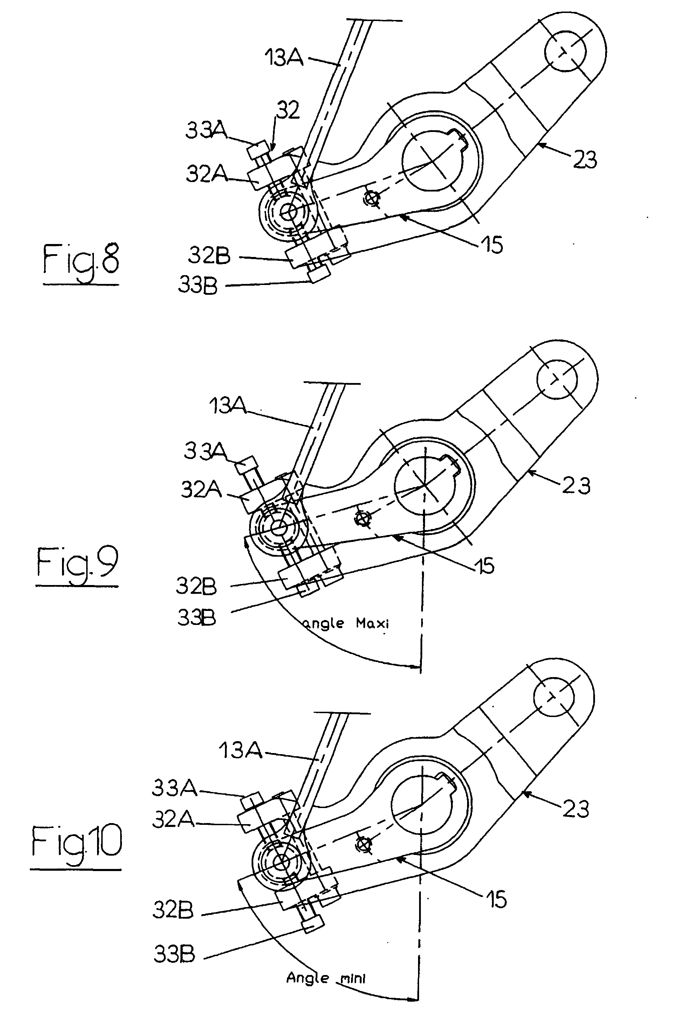

Dans ce but, l'extrémité de ladite bielle reliée à l'extrémité proximale du tirant 13A est disposée entre deux butées réglables dont sont munies, respectivement, les deux branches 32A, 32B d'une fourchette que présente une chape 32 rigidement liée au basculeur 9. Ces butées réglables sont constituées par des vis de pression 33A, 33B se vissant dans les branches fixes 32A-32B (figures 8 à 10).

La figure 8 illustre la position "centrale" de la bielle réglable 15.

En dévissant la ou les vis 33A et en vissant la ou les vis 33B, on provoque un déplacement angulaire de la bielle 15 (figure 9), ce déplacement est transmis, par le tirant 13A au renvoi 10 qui tourne autour de son axe principal (arbre 2) d'une valeur correspondante ; ce déplacement angulaire du renvoi 10 est transmis, par l'intermédiaire du tirant 13B, à la bielle 18 du préhenseur qui tourne autour de son axe principal (arbre 19) d'une valeur angulaire correspondante. Finalement, le préhenseur 20 qui est liée rigidement à la bielle 18, tourne d'une valeur angulaire correspondant exactement au déplacement angulaire de la bielle 15.

Le réglage de la bielle 15 en sens opposé est obtenu en dévissant la ou les vis 33B et en vissant la ou les vis 33A (figure 10).

**Revendications**

1. Machine robotisée, par exemple pour la récolte de fruits ou le tri d'objets divers, comprenant un manipulateur à coordonnées sphériques, à au moins trois degrés de liberté: deux rotations perpendiculaires et concourantes **Théta** et **Phi**, et une translation **Rho** de son préhenseur vers l'objet à saisir, de sorte que l'axe de translation (A3) de la tête de préhension (20a) de ce préhenseur (20) intersecte toujours les deux axes Théta (A1) et Phi (A2) des rotations en un point central (I), ce manipulateur à coordonnées sphériques étant muni d'un système de vision artificielle (24) pour le repérage des objets à saisir, système dont le centre optique est placé exactement audit point central (I), ledit manipulateur à coordonnées sphériques comportant un bras de manipulation (1) du type à pantographe symétrique constitué d'une première branche ou bras (1A) et d'une deuxième branche ou avant-bras (1B), ledit bras (1) étant assujetti à des moyens (21) assurant son pivotement autour d'un axe (A4) et doté de moyens mécaniques assurant la cinématique suivante : toute rotation du bras (1A) de valeur +a se traduit par une rotation de l'avant-bras (1B) d'une valeur -2a par rapport audit bras, et par une rotation du préhenseur (20) monté à l'extrémité distale de l'avant-bras (1B), d'une valeur (+a) par rapport audit avant-bras, le résultat étant une simple translation de l'extrémité distale (20a) dudit préhenseur par rapport à un repère fixe, le long d'un axe (A3) correspondant à l'axe optique du système de vision (24), **caractérisée en ce que** ladite première branche ou bras (1A) et ladite deuxième branche ou avant-bras (1B) sont disposées dans deux plans parallèles de façon à pouvoir se croiser, et **en ce que** le dispositif assurant les mouvements de l'ensemble du bras de manipulation (1) comprend :

- un axe (2) monté avec une aptitude de rotation à l'extrémité distale du bras (1A) et sur lequel sont calés un premier pignon (4) et l'extrémité proximale de l'avant-bras (1B) ;
- un deuxième pignon (6) calé sur un axe fixe (7) autour duquel est monté le bras (1A), par l'intermédiaire de son extrémité proximale, avec une aptitude de basculement, ce deuxième pignon (6) étant relié au premier pignon (4), par un lien souple ou rigide de transmission (5) et son diamètre étant le double de celui dudit premier pignon (4) ;
- un renvoi (10) monté, par l'intermédiaire de sa portion centrale délimitant une branche proximale (10A) et une branche distale (10B), autour de l'axe de liaison (2) du bras (1A) et de l'avant-bras (1B), et dans lequel ledit axe (2) est logé avec une aptitude de rotation ;
- un premier tirant rigide (13A) fixé, par l'intermédiaire de ses extrémités opposées et au moyen d'articulations (12, 14), d'une part, à la branche proximale (10A) du renvoi (10) et, d'autre part, sur l'une des extrémités d'une bielle fixe (15) dont l'autre extrémité est montée fixement, autour de l'axe (7) soutenant l'ensemble du bras de manipulation ; de sorte que l'ensemble : bras (1A)-branche proximale (10A) du renvoi (10)-tirant (13A)-bielle (15), forme un premier parallélogramme déformable dont la bielle (15) constitue un côté fixe ;
- un deuxième tirant rigide (13B) fixé, par l'intermédiaire de ses extrémités opposées et au moyen d'articulations (16, 17), d'une part à la branche distale (10B) du renvoi (10) et, d'autre part, à une bielle (18) dont l'autre extrémité est rigidement solidaire de l'axe (19) du préhenseur (20) logé, avec une aptitude de rotation, dans l'extrémité distale de l'avant-bras (1B), de sorte que l'ensemble : avant-bras (1B)-branche distale (10B) du renvoi (10)-tirant (13B)-bielle (18), forme un deuxième parallélogramme déformable ;
- le bras (1) ainsi agencé étant assujetti à des moyens (21) assurant son basculement autour de son axe fixe (7), ce basculement engendrant, suivant sa direction, un mouvement d'avance ou de recul de la tête de préhension (20a) du préhenseur (20) le long d'une trajectoire rectiligne (Rho).

**2.** Machine robotisée suivant la revendication 1, **caractérisée en ce que** le préhenseur (20) a une longueur au moins égale ou supérieure à la Longueur de l'avant-bras (10).

**3.** Machine robotisée selon la revendication 1, **caractérisée en ce que** l'orientation de la bielle fixe (15) reliant les extrémités proximales du bras (1A) et du premier tirant (13A), est réglable.

**4.** Machine robotisée selon l'une quelconque des revendications 1 à 3, **caractérisée en ce que** les tirants (13A, 13B) sont disposés entre les plans dans lesquels pivotent, respectivement, le bras (1A) et l'avant-bras (1B).

**5.** Machine robotisée suivant l'une quelconque des revendications 1 à 4, **caractérisée en ce que** les tirants (13A, 13B) sont montés avec une aptitude de pivotement dans deux plans parallèles, de manière à pouvoir se croiser.

**6.** Machine robotisée selon l'une quelconque des revendications 1 à 5, **caractérisée en ce que** les différents mouvements du manipulateur (1-20) sont assurés par des moteurs électriques à vis à billes (21, 27, 28).

**7.** Machine robotisée suivant l'une quelconque des revendications 1 à 6, **caractérisée en ce que** la branche proximale (1A) du bras de manipulation (1A-1B) comprend une portion (1A') s'étendant au-dessous ou au-delà de l'axe de pivotement (A4) de ladite branche proximale (1A), et **en ce que** le moteur (21) assurant le pivotement de cette dernière est fixé à ladite portion (1A') de telle sorte que la quasi totalité de sa masse soit disposée au-dessous ou au-delà dudit axe et contrebalance le poids de l'ensemble du bras de manipulation.


**Patentansprüche**

**1.** Robotervorrichtung, beispielsweise zum Ernten von Obst oder zum Sortieren verschiedener Gegenstände, umfassend ein Greifsystem mit Kugelkoordinaten mit mindestens drei Freiheitsgraden: zwei vertikalen und zusammenwirkenden Drehungen **Theta** und **Phi** und einer Translationsbewegung **Rho** des Greifers in Richtung auf den zu ergreifenden Gegenstand, so dass die Translationsachse (A3) des Greifkopfs (20a) des Greifers (20) immer die beiden Achsen Theta (A1) und Phi (A2) der Drehungen in einem zentralen Punkt (I) überschneidet, wobei das Greifsystem mit Kugelkoordinaten mit einem künstlichen Erkennungssystem (24) zum Erfassen der zu ergreifenden Gegenstände ausgestattet ist, einem System, dessen optisches Zentrum genau im zentralen Punkt (I) positioniert ist, wobei das Greifsystem mit Kugelkoordinaten einen Greifarm (1) in Form eines symmetrischen Pantographs umfaßt, der aus einem ersten Schenkel oder Arm (1A) und einem zweiten Schenkel oder Ausleger (1B) gebildet wird, wobei der Arm (1) mit Hilfe der Mittel (21) befestigt ist, die sein Schwenken um eine Achse (A4) sicherstellen, und der mit mechanischen Mitteln ausgestattet ist, die folgende Kinematik sicherstellen: jede Drehung des Arms (1A) mit dem Wert +a äußert sich in einer Drehung des Auslegers (1B) mit einem Wert -2a in bezug auf den Arm, und durch eine Drehung des am distalen Ende des Auslegers (1B) montierten Greifers (20) mit einem Wert (+a) in bezug auf den Ausleger, wobei das Ergebnis eine einfache Translation des distalen Endes (20a) des Greifers in bezug auf einen festen Bezugspunkt entlang einer Achse (A3) ist, die der optischen Achse des Erkennungssystems (24) entspricht, **dadurch gekennzeichnet, dass** der erste Schenkel bzw. Arm (A1) und der zweite Schenkel bzw. Ausleger (1B) in zwei parallelen Ebenen so angeordnet sind, dass sie sich überkreuzen können, und dadurch, dass die Einrichtung, welche die Bewegungen der Greifarmeinheit (1) sicherstellt, umfaßt:

- eine Achse (2), die drehbar am distalen Ende des Arms (1A) montiert ist und auf der ein erstes Ritzel (4) und das proximale Ende des Auslegers (1B) verkeilt sind;
- ein zweites Ritzel (6), das auf einer festen Achse (7) verkeilt ist, um die der Arm (1A) über sein proximales Ende kippbar montiert ist, wobei das zweite Ritzel (6) mit dem ersten Ritzel (4) über eine flexible oder steife Übertragungsverbindung (5) verbunden. ist und sein Durchmesser doppelt so groß wie der des ersten Ritzels (4) ist;
- ein Vorgelege (10), das über seinen mittleren Abschnitt, der einen proximalen Schenkel (10A) und einen distalen Schenkel (10B) begrenzt, um die Verbindungsachse (2) des Arms (1A) und des Auslegers (1B) montiert ist, und in dem die Achse (2) drehbar gelagert ist;
- eine erste starre Spannstange (13A), die an ihren gegenüberliegenden Enden mittels Gelenken (12, 14) einerseits am proximalen Schenkel (10A) des Vorgeleges (10) und andererseits an einem der Enden eines festen Pleuels befestigt ist, dessen anderes Ende fest um die Achse (7) montiert ist, welche die Greifarmeinheit trägt; so dass die Einheit: Arm (1A) - proximaler Schenkel (10A) des Vorgeleges (10) - Spannstange (13A) - Pleuel (15) ein erstes verformbares Parallelogramm bildet, wobei das Pleuel (15) eine feste Seite bildet;

- eine zweite starre Spannstange (13B), die an ihren gegenüberliegenden Enden mittels Gelenkverbindungen (16, 17) einerseits am distalen Schenkel (10B) des Vorgeleges (10) und andererseits an einem Pleuel (18) befestigt ist, dessen anderes Ende fest einstückig ist mit der Achse (19) des Greifers (20), der drehbar im distalen Ende des Auslegers (1B) gelagert ist, so dass die Einheit : Ausleger (1B) - distaler Schenkel (10B) des Vorgeleges (10) - Spannstange (13B) - Pleuel (18) ein zweites verformbares Parallelogramm bildet;
- den so angeordneten Arm (1), der über die Mittel (21) befestigt ist, die seine Kippbewegung um seine feste Achse (7) sicherstellen, wobei diese Kippbewegung, je nach Richtung, eine Vorschub- oder Rückwärtsbewegung des Greifkopfs (20a) des Greifers (20) entlang einer geradlinigen Bahn (Rho) auslöst.

2. Robotervorrichtung nach Anspruch 1, **dadurch gekennzeichnet, dass** der Greifer (20) eine Länge aufweist, die mindestens gleich oder größer ist als die Länge des Auslegers (10).

3. Robotervorrichtung nach Anspruch 1, **dadurch gekennzeichnet, dass** die Ausrichtung des festen Pleuels (15), das die proximalen Enden des Arms (1A) und der ersten Spannstange (13A) miteinander verbindet, regulierbar ist.

4. Robotervorrichtung nach einem der Ansprüche 1 bis 3, **dadurch gekennzeichnet, dass** die Spannstangen (13A, 13B) zwischen den Ebenen angeordnet sind, in denen der Arm (1A) bzw. der Ausleger (1B) Schwenkbewegungen ausführen.

5. Robotervorrichtung nach einem der Ansprüche 1 bis 4, **dadurch gekennzeichnet, dass** die Spannstangen (13A, 13B) schwenkbar in zwei parallelen Ebenen auf eine Weise montiert sind, dass sie sich überkreuzen können.

6. Robotervorrichtung nach einem der Ansprüche 1 bis 5, **dadurch gekennzeichnet, dass** die verschiedenen Bewegungen des Greifsystems (1-20) durch Kugelumlaufgetriebe-Elektromotoren (21, 27,28) sichergestellt werden.

7. Robotervorrichtung nach einem der Ansprüche 1 bis 6, **dadurch gekennzeichnet, dass** der proximale Schenkel (1A) des Greifarms (1A-1B) einen Abschnitt (1A') umfaßt, der sich unter oder über der Schwenkachse (A4) des proximalen Schenkels (1A) erstreckt, und dadurch, dass der Motor (21), der die Schwenkung des letzteren sicherstellt, so am Abschnitt (1A') befestigt ist, dass quasi die Gesamtheit seiner Masse unter oder über dieser Achse angeordnet und das Gewicht der Greifarmeinheit im Gleichgewicht hält.

## Claims

1.  Robotised machine, for example for harvesting of fruit or sorting of various objects, comprising a manipulator with spherical coordinates, with at least three degrees of freedom, i.e. two perpendicular and concurrent rotations Theta and Phi, and translation Rho of its grasping unit towards the object to be grasped, such that the axis of translation (A3) of the grasping head (20a) of this grasping unit (20) always intersects the two axes Theta (A1) and Phi (A2) of the rotations at a central point (I), this manipulator with spherical coordinates being provided with an artificial vision system (24) for location of the objects to be grasped, the optical centre of which system is placed exactly at the said central point (I), the said manipulator with spherical coordinates comprising a handling arm (1) of the symmetrical pantograph type consisting of a first branch or arm (1A) and a second branch or extension arm (1B), the said arm (1) being secured to means (21) which assure its pivoting around an axis (A4) and being provided with mechanical means which assure the following kinematics: any rotation of the arm (1A) with a value +a leads to rotation of the extension arm (1B) by a value -2a relative to the said arm, and to rotation of the grasping unit (20) fitted on the distal end of the extension arm (1B), by a value (+a) relative to the said extension arm, the result being a simple translation of the distal end (20a) of the said grasping unit relative to a fixed reference, along an axis (A3) which corresponds to the optical axis of the vision system (24), **characterised in that** the said first branch or arm (1A) and the said second branch or extension arm (1B) are disposed on two parallel planes such as to be able to intersect one another, and **in that** the device which assures the movements of the assembly of the handling arm (1) comprises:

    -   a shaft (2) which is fitted such that it can rotate at the distal end of the arm (1A) and on which there are wedged a first pinion (4) and the proximal end of the extension arm (1B);
    -   a second pinion (6) which is wedged onto a fixed shaft (7) around which the arm (1A) is fitted, via its proximal end, such that it can pivot, this second pinion (6) being connected to the first pinion (4) by a rigid or flexible transmission link (5) and its diameter being twice that of the said first pinion (4);
    -   a return (10) which is fitted by means of its central portion which delimits a proximal branch (10A) and a distal branch (10B), around the connection shaft (2) of the arm (1A) and of the extension arm (1B), and wherein the said shaft (2) is accommodated such that it can rotate;
    -   a first rigid tie rod (13A) which is secured via its opposite ends and by means of articulations (12,14), firstly to the proximal branch (10A) of the return (10) and secondly to one of the ends of a fixed connecting rod (15), the other end of which is fitted in a fixed manner around the shaft (7) which supports the assembly of the handling arm; such that the assembly, i.e. the arm (1A)- proximal branch (10A) of the return (10)-tie rod (13A)- connecting rod (15) forms a first deformable parallelogram, the connecting rod (15) of which constitutes a fixed side;
    -   a second rigid tie rod (13B) which is secured via its opposite ends and by means of articulations (16,17), firstly to the distal branch (10B) of the return (10) and secondly to a connecting rod (18), the other end of which is rigidly integral with the shaft (19) of the grasping unit (20), which is accommodated such that it can rotate in the distal end of the extension arm (1B), such that the assembly, i.e. the extension arm (1B)- distal branch (10B) of the return (10)-tie rod (13B)- connecting rod (18) forms a second deformable parallelogram;
    -   the arm (1) thus arranged being secured to means (21) which assure its pivoting around its fixed shaft (7), this pivoting giving rise, according to its direction , to a movement of advance or withdrawal of the grasping head (20a) of the grasping unit (20) along a straight path (Rho).

2.  Robotised machine according to claim 1, **characterised in that** the grasping unit (20) has a length which is at least equal to, or greater than, the length of the extension arm (10).

3.  Robotised machine according to claim 1, **characterised in that** the orientation of the fixed connection rod (15) which connects the proximal ends of the arm (1A) and of the first tie rod (13A) is adjustable.

4.  Robotised machine according to any one of claims 1 to 3, **characterised in that** the tie rods (13A, 13B) are disposed between the planes on which there pivot respectively the arm (1A) and the extension arm (1B).

5.  Robotised machine according to any one of claims 1 to 4, **characterised in that** the tie rods (13A, 13B) are fitted such that they can pivot on two parallel planes, so that they can intersect with one another.

6.  Robotised machine according to any one of claims 1 to 5, **characterised in that** the different movements of the manipulator (1-20) are assured by electric motors with ball screws (21, 27, 28).

7. Robotised machine according to any one of claims 1 to 6, **characterised in that** the proximal branch (1A) of the handling arm (1A-1B) comprises a portion (1A') which extends beneath or beyond the axis of pivoting (A4) of the said proximal branch (1A), and **in that** the motor (21) which assures the pivoting of the latter is secured to the said portion (1A') such that almost all of its mass is disposed beneath or beyond the said axis, and counterbalances the weight of the assembly of the handling arm.

1

1B

13A

10

16

1A

29

13B

17

9

25a

25

1A'

25b

Rho

A3

Phi

45°

45°

A2

Théta

45°

45°

A1

26

Fig.1

Fig.2

Fig. 3

Fig. 4

Fig.5

Fig.6

Fig. 7

Fig.8

Fig.9

angle Maxi

Fig.10

Angle mini